(19)

Europäisches
Patentamt
European
Patent Office
Office européen
des brevets

(11)   **EP 2 789 986 A1**

(12)   **EUROPEAN PATENT APPLICATION**

(43) Date of publication:
**15.10.2014 Bulletin 2014/42**

(51) Int Cl.:
***G01D 5/22*** *(2006.01)*

(21) Application number: **13185418.4**

(22) Date of filing: **20.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.04.2013 EP 13163196**

(71) Applicant: **Tyco Electronics AMP GmbH
64625 Bensheim (DE)**

(72) Inventors:
 • **Wolf, Marco
  76879 Hochstadt (DE)**
 • **Rieder, Martin
  67105 Schifferstadt (DE)**
 • **Zapf, Joachim
  67117 Limburgerhof (DE)**

(74) Representative: **Grünecker, Kinkeldey,
Stockmair & Schwanhäusser
Leopoldstrasse 4
80802 München (DE)**

(54)    **Contactless position sensor, and contactless position sensor system**

(57)    The invention relates to an improved contactless position sensor and a system incorporating same. Such a contactless position sensor comprises at least two sensor coils (1, 2) each comprising a magnetic permeable core (5, 6) and windings (9, 10) defining a coil axis. The at least two sensor coils (1, 2) are arranged with the coil axes essentially in parallel or in alignment to each other. An electrical circuit (17) of the sensor drives a predetermined alternating current within each of the at least two sensor coils (1, 2) and determines a high frequency voltage component of a voltage across each of the at least two sensor coils. The predetermined alternating current includes a low frequency current component, and a high frequency current component. The electrical circuit (17) detects the position of a ferromagnetic target (20) by subtracting from each other amplitude levels of the high frequency voltage components of two of the determined voltages and by comparing the subtraction result to a pre-determined reference pattern.

Fig. 2

EP 2 789 986 A1

**Fig. 3**

**Description**

The invention relates to an improved contactless position sensor for detecting a position of an at least partly ferromagnetic target and a contactless position sensor system incorporating same contactless position sensor.

In the context of the invention, a contactless position sensor is to be understood as current driven magnetic field sensor.

Accordingly, a contactless position sensor includes a sensor coil supplied with a predetermined drive current. Then, an externally applied magnetic field interacts within the sensor coil with an internal magnetic field induced by the predetermined drive current. The amount of interaction between the two magnetic fields is detectable by way of measuring the electrical inductance of the sensor coil. Moreover, a change in electrical inductance of the sensor coil indicates a change in the external magnetic field, provided internal magnetic field is kept constant.

Generally, contactless position sensors are utilized for the detection of rotational movement or longitudinal movement, in particular, for the detection of a position of an object performing same movement. For this purpose, the object is equipped with a target as position indicator element. The target generates or interacts with an external magnetic field. Changes in the external magnetic field can be detected by the contactless position sensor.

In an exemplary deployment scenario for a contactless position sensor the target includes a permanent magnet. A movement of the permanent magnet as target in the vicinity of the contactless position sensor changes the external magnetic field to which the contactless position sensor is exposed. Such a variation in external magnetic field is, for instance, detectable as a change in the electrical inductance in the sensor coil of the contactless position sensor.

An alternative deployment scenario for a contactless position sensor is proposed in EP 0 684 454 A1. Therein, a rotational movement of a ferromagnetic gear is to be detected. Instead of positioning a permanent magnet as target on one or a plurality of teeth of the gear, it is suggested to position a permanent magnet in-between the contactless position sensor and the ferromagnetic gear. When during rotation a ferromagnetic tooth of the gear is positioned in close proximity to the permanent magnet, the magnetic field of the permanent magnet is deflected. This change in external magnetic field is detectable within the contactless position sensor.

In the document, it is recognized that the proposed arrangement allows for a wider distance between the contactless position sensor and the target and dispenses with the need of fixing permanent magnets as position indicator elements on the teeth of the gear as targets. Furthermore, the rotational movement of a gear may also be detected in a configuration where a wall separates the contactless position sensor from the permanent magnet.

The development of contactless position sensors has encountered various refinements as shall be discussed with reference to EP 0 891 560 B1. The contactless position sensor described therein has ever since been recognized to provide a simple but precise method for detecting an external magnetic field.

In this respect, the working principle of the disclosed contactless position sensor shall be explained in the following:

If a sensor coil is operated within of a non-saturated state of a ferromagnetic core included in the sensor coil, the sensor coil mainly acts as constant electrical impedance (inductive reactance). This results from the fact that the magnetization of the ferromagnetic core increases, in a non-saturated state, with the applied magnetic field. When the magnetization of the ferromagnetic core reaches a saturated state, then the electrical impedance (inductive reactance) of the sensor coil significantly decreases.

Commonly, the transition region between a non-saturated and a saturated state for a ferromagnetic core is used as "working point" of a detector coil. In this transition region, a change in an externally applied magnetic field results in a change in electrical impedance (inductive reactance). This change in electrical impedance (inductive reactance) is proportional to an external magnetic filed ($H_{ext}$) such that an electronic circuit may, in determining the electrical impedance (inductive reactance), derive the variation in the external magnetic filed ($\Delta H_{ext}$).

In EP 0 891 560 B1, it is further suggested to supply a current to the sensor coil which includes positive and negative current pulses. A current pulse is described as comprising a raising edge and a falling edge resulting in essential rectangular-shaped current pulses.

Specifically, the amplitude of the positive and negative current pulses is adapted such that the ferromagnetic core of the sensor coil is driven into a saturation state of positive and negative polarity. Accordingly, in case of a positive current pulse, the internal magnetic field amounts to: $H_{int} = n/I * I$. The ferromagnetic core of the sensor coil is magnetized by a remainder of the internal magnetic field $H_{int}$ increased/reduced by the external magnetic field $H_{ext}$.

Specifically, in response to the raising edge of a current pulse, the sensor coil experiences a voltage peak due to the counter-electromotive force pushing against the current inducing it. In response to the falling edge of a current pulse, the sensor coil experiences a second voltage peak with opposite polarity. This second voltage peak results from self-inductance L of the magnetized sensor coil, where the voltage signal is determined as $v = L\, di/dt$.

Accordingly, the height of the second voltage peak depends on the magnetization of the magnetic core of the sensor coil which is based on the remainder of the internal magnetic field $H_{int}$ increased/reduced by the external magnetic field $H_{ext}$. Consequently, the height of the second voltage peak allows detecting a presence/absence of an external magnetic field.

In more detail, the contactless position sensor detects amplitudes of voltage peak for falling edges of positive current pulses as well as of negative current pulses, and uses both amplitude values for determining the presence/absence of an external magnetic field.

In comparing the detected amplitudes of voltage peaks with previous detection results, it is possible to determine the amount of change of the external magnetization filed $\Delta H_{ext}$, i.e. a movement of the target with respect to the contactless position sensor.

As will be explained in the following, the contactless position sensor is limited in its accuracy.

For each combination of subsequently applied positive and negative current pulses, the contactless position sensor determines only a single change in the externally applied magnetic field. In this respect, the number of detection results is limited by the current pulse pattern.

Further, the voltage pulse is short and high such that amplitude detection thereof is difficult and requires substantial processing capabilities in the sensor. Moreover, in case of high self-inductance voltages, the detection may require for circuit component with high voltage ratings.

Furthermore, the detection results are influenced by any external magnetic field, not just the external magnetic field $H_{ext}$ of the target. For instance, in automotive appliances contactless position sensors are surrounded by various ferromagnetic parts which, if magnetized, may distort the external magnetic field $H_{ext}$ of the target. Further, the terrestrial magnetic field may also distort the external magnetic field $H_{ext}$ of the target.

Even further, although EP 0 891 560 B1 describes a control algorithm providing a compensation current to counter a temperature drift, material tolerances, etc. in the sensor coil, its programming and deployment to an electronic circuit included in the contactless position sensor is costly, increases material costs and is an obstacle to a clean and easy sensor design.

In this respect, it is an object of the invention to suggest an improved contactless position sensor which overcomes the disadvantages noted above, e.g. to avoid the influence to constant external magnetic fields. Furthermore, it is another object of the invention to propose a contactless position sensor which allows for a more precise position detection of a ferromagnetic target. According to an even further object of the invention, a contactless position sensor system is proposed which enables detecting a position of a ferromagnetic target by way of deflection of an external magnetic field $H_{ext}$.

At least one of the above mentioned objects is solved by the subject-matter of the independent claims. Advantageous embodiments are subject to the dependent claims.

According to one exemplary embodiment in line with the first and second object of the invention, a contactless position sensor 100 is suggested for detecting a position of a ferromagnetic target 20 by way of deflection of an external magnetic field $H_{ext}$.

The contactless position sensor comprises at least two sensor coils 1, 2 each comprising a magnetic permeable core 5, 6 and windings 9, 10 surrounding the magnetic permeable core 2, 6 defining a coil axis. The at least two sensor coils 1, 2 are arranged such that the coil axes essentially in parallel to each other, and that one end 13, 14 of each of the at least two sensor coils 1, 2 facing a space for movement of the ferromagnetic target 20. The movement of the ferromagnetic target 20 is in a direction across with respect to each of the at least two coil axes.

The contactless position sensor further comprises an electrical circuit 17 for driving a predetermined alternating current I within each of the at least two sensor coils 1, 2 and for determining a high frequency voltage component $V_{1H}$, $V_{2H}$ of a voltage $V_1$, $V_2$ across each of the at least two sensor coils 1, 2.

The predetermined alternating current I includes a low frequency current component $I_1$ set to drive each of the at least two sensor coils 1, 2 into a saturation state, and a high frequency current component $I_2$ set for measuring the impedance of each of the at least two sensor coils 1, 2.

Further, the electrical circuit 17 is adapted to detect the position of the ferromagnetic target 20 by subtracting from each other amplitude levels of the high frequency voltage components $V_{1H}$, $V_{2H}$ of two of the determined voltages $V_1$, $V_2$ across the respective two sensor coils 1, 2, and by comparing the subtraction result to a pre-determined reference pattern.

Advantageously, the impedance of the at least two sensor coils 1 and 2 may be determined based on the high frequency voltage component $V_{1H}$, $V_{2H}$, of the voltage $V_1$, $V_2$, across the respective of the at least two sensor coils 1 and 2. Specifically, the impedance of the at least two sensor coils 1 and 2 is directly proportional to the amplitude level of the high frequency voltage component $V_{1H}$, $V_{2H}$ of the voltage $V_1$, $V_2$, across the respective at least two sensor coils 1 and 2.

According to another exemplary embodiment in line with the first and second object of the invention a contactless position sensor 300 is proposed for detecting a position of a ferromagnetic target 20 by way of deflection of an external magnetic field $H_{ext}$.

The contactless position sensor comprises at least two sensor coils 1, 2 each comprising a magnetic permeable core 5, 6 and windings 9, 10 surrounding the magnetic permeable core 2, 6 defining a coil axis. The at least two sensor coils 1, 2 are arranged such that the coil axes are in alignment to each other, and that the distant ends 13, 14 of the at least two sensor coils 1, 2 define a space for movement of the ferromagnetic target 20. The movement of the ferromagnetic target 20 is in a direction essentially in parallel with respect to each of the at least two coil axes.

The contactless position sensor further comprises an electrical circuit 17 for driving a predetermined alternating current I within each of the at least two sensor coils 1, 2 and for determining a high frequency voltage component $V_{1H}$, $V_{2H}$ of a voltage $V_1$, $V_2$ across each of the at least two sensor coils 1, 2.

The predetermined alternating current I includes a low frequency current component $I_1$ set for driving each of the at least two sensor coils 1, 2 into a saturation state, and a high frequency current component $I_2$ set for determining the impedance of each of the at least two sensor coils 1, 2.

Further, the electrical circuit 17 is adapted to detect the position of the ferromagnetic target 20 by subtracting from each other amplitude levels of the determined high frequency voltage components $V_{1H}$, $V_{2H}$ of two of the voltages $V_1$, $V_2$ across the respective of the at least two sensor coils 1, 2, and by comparing the subtraction result to a pre-determined reference pattern.

Advantageously, the impedance of the at least two sensor coils 1 and 2 may be determined based on the high frequency voltage component $V_{1H}$, $V_{2H}$, of the voltage $V_1$, $V_2$, across the respective of the at least two sensor coils 1 and 2. Specifically, the impedance of the at least two sensor coils 1 and 2 is directly proportional to the amplitude level of the high frequency voltage component $V_{1H}$, $V_{2H}$ of the voltage $V_1$, $V_2$, across the respective at least two sensor coils 1 and 2.

According to a more detailed embodiment, the electrical circuit 17 of the contactless position sensor 100 further comprises a high-pass filter 22 for determining the high frequency voltage component $V_{1H}$, $V_{2H}$ of the voltage $V_1$, $V_2$ across each of the at least two sensor coils 1, 2. Further, the cut-off frequency of the high-pass filter 22 is based on the frequency of the high frequency current component $I_2$ for the respective of the at least two sensor coils 1, 2. According to another more detailed embodiment, the electrical circuit 17 of the contactless position sensor 100 further comprises a low-pass filter 21 for determining a low frequency voltage component $V_{1L}$, $V_{2L}$ of the voltage $V_1$, $V_2$ across each of the at least two sensor coils 1, 2 resulting from the respective low frequency current component $I_1$. The cut-off frequency of the low-pass filter 21 is based on the frequency $f_1$ of the low frequency current component $I_1$ for the respective of the at least two sensor coils 1, 2.

According to a further more detailed embodiment, the electrical circuit 17 of the contactless position sensor 100 further comprises a phase detector 23 for detecting a phase-offset between two low frequency voltage components $V_{1L}$, $V_{2L}$ of the voltages $V_1$, $V_2$ across the respective two sensor coils 1, 2. Based on the detected phase-offset, one of the two determined high frequency voltage components $V_{1H}$, $V_{2H}$ is shifted with respect to the other of the two determined high frequency voltage components $V_{1H}$, $V_{2H}$ before subtracting from each other an amplitude level of the two high frequency voltage components $V_{1H}$, $V_{2H}$.

According to yet another more detailed embodiment, the electrical circuit 17 of the contactless position sensor 100 is further adapted to subtract from each other a level of an amplitude envelope of the determined high frequency voltage component $V_{1H}$, $V_{2H}$ across two of the at least two sensor coils 1, 2.

According to another more detailed embodiment, an amplitude of the low frequency current component $I_1$ is set based on the external magnetic field $H_{ext}$ to be used for detecting a position of a ferromagnetic target 20; and a low frequency $f_1$ of the low frequency current component $I_1$ is set such that the impedance of the respective of the at least two sensor coils 1, 2 for the low frequency $f_1$ corresponds to the DC characteristic of the sensor coil 1, 2.

According to a further more detailed embodiment, a high frequency $f_2$ of the high frequency current component $I_2$ is set for each of the at least two sensor coils 1, 2 based on the magnetic permeability of the respective sensor coil 1, 2, such that the high frequency current component $I_2$ allows measurement of the impedance but has a negligible effect on magnetization of the magnetic permeable core 5, 6 of the respective sensor coil 1, 2.

According to yet another more detailed embodiment, the high frequency $f_2$ of the high frequency current component $I_2$ is set for each of the at least two sensor coils 1, 2 to correspond to the resonance frequency of the respective of the at least two sensor coils 1, 2.

According to a more detailed embodiment, the contactless position sensor 100 further comprises a series resistor $R_1$, $R_2$ for each of the at least two sensor coils 1, 2. Each series circuit, formed of the series resistor $R_1$, $R_2$ and of the respective sensor coil 1, 2, is supplied by the electrical circuit 17 with the predetermined alternating current I.

According to another more detailed embodiment, each of the series resistors ($R_1$, $R_2$) of the contactless position sensor 100 is configured to have a same resistance value as the DC impedance value of the connected sensor coil 1, 2.

According to a further more detailed embodiment, the contactless position sensor 100, comprises four sensor coils 1, 2, 3, 4 each comprising a magnetic permeable core 5, 6, 7, 8 and windings 9, 10, 11, 12 surrounding the magnetic permeable core 5, 6, 7, 8 defining a coil axis; and a series resistor $R_1$, $R_2$, $R_3$, $R_4$ for each of the four sensor coils 1, 2, 3, 4.

Each series circuit, formed of the series resistor $R_1$, $R_2$, $R_3$, $R_4$ and the respective sensor coil 1, 2, 3, 4, is supplied by the electrical circuit 17 with one of a zero-degree, a 90-degree, a 180-degree and a 270-degree phase-shifted version of the predetermined alternating current I. The phase-shift is set (determined) based on the frequency $f_1$ of the low-frequency current component $I_1$.

Further, the electrical circuit 17 is adapted to detect the position of the ferromagnetic target 20 by subtracting from each other amplitude levels of the high frequency voltage components $V_{1H}$, $V_{2H}$, $V_{3H}$, $V_{4H}$ of two of the determined voltages $V_1$, $V_2$, $V_3$, $V_4$ across the respective two sensor coils 1, 3; 2, 4 that are supplied with zero-degree and the 180-degree phase-shifted or that are supplied with the 90-degree and the 270-degree phase-shifted version of the predetermined alternating current I, and by comparing the subtraction results to a predetermined reference pattern.

According to a more detailed embodiment, the four sensor coils of the contactless position sensor 100 are positioned forming a square arrangement with the coil axes essentially in parallel to each other.

According to a more detailed embodiment, the contactless position sensor 100 further comprises a radial magnetized permanent magnet 30 arranged in-between the at least two sensor coils 1, 2 for generating an external magnetic field $H_{ext}$ which is essentially perpendicular with respect to each of the at least two coil axes.

According to one exemplary embodiment in line with the third object of the invention, a contactless position sensor system is proposed, comprising a contactless position sensor 100, a permanent magnet 30 and a ferromagnetic target 20. The contactless position sensor 100 is provided according to one of the previously described embodiments. The permanent magnet 30 is arranged in-between the at least two sensor coils 1, 2 for generating an external magnetic field $H_{ext}$ which is essentially perpendicular with respect to each of the at least two coil axes. Further, the ferromagnetic target 20 is to be moved across with respect to each of the at least two coil axes in a space faced by one end 13, 14 of each of the at least two sensor coils 1, 2. The contactless position sensor 100 detects a position of a ferromagnetic target 20 by way of deflection of the external magnetic field $H_{ext}$.

The accompanying drawings are incorporated into the specification and form a part of the specification to illustrate several embodiments of the present invention. These drawings, together with a description, serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form - individually or in different combinations - solutions according to the present invention. Further features and advantages will be become apparent from the following more particular description of the various embodiments of the invention as illustrated in the accompanying drawings, in which like references refer to like elements, and wherein:

**Fig. 1**      schematically shows a contactless position sensor according to a first embodiment of the invention including signal plots during operation;

**Fig. 2**      schematically shows a contactless position sensor according to a second embodiment of the invention including signal plots during operation;

**Fig. 3**      schematically shows a contactless position sensor according to a third embodiment of the invention including signal plots during operation;

**Fig. 4a, 4b and 4c**      exemplifies operation of the contactless position sensor according to the second embodiment for different positions of a ferromagnetic target;

**Fig. 5**      schematically shows a contactless position sensor according to a fourth embodiment of the invention;

**Fig. 6**      illustrates a circuit diagram of the contactless position sensor according to the fourth embodiment of the invention, and exemplifies operation for different positions of a ferromagnetic target; and

**Fig. 7**      schematically shows the contactless position sensor according to the fifth embodiment of the invention.

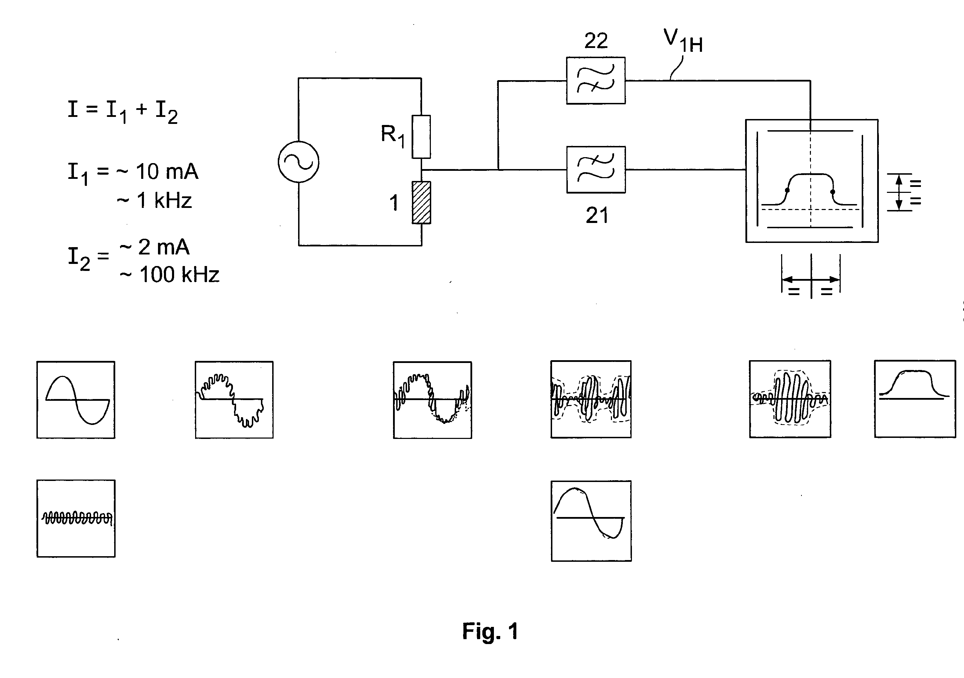

Referring now to Fig. 1, a schematic diagram of the contactless position sensor 100 according to the first embodiment of the invention is shown.

The contactless position sensor 100 includes two sensor coils 1 and 2. Each of the sensor coils 1 and 2 includes a magnetic permeable core 5 and 6 and windings 9 and 10 surrounding the respective magnetic permeable core 5 and 6.

Exemplary, the magnetic permeable cores 5 and 6 are realized as a thin soft magnetic foil made from an amorphous iron, cobalt, silicon and bore alloy. Moreover, the term "amorphous metal" is to be understood as a solid metallic material with a disordered atomic-scale structure. The thickness of the foil is, for example, in the region of $25 \mu m$.

For each of the two sensor coils 1 and 2 the arrangement of the magnetic permeable core 5 and 6 in connection with the windings 9 and 10 define a respective coil axis. Specifically, the two sensor coils 1 and 2 are arranged with the coil axis essentially parallel to each other. Alternatively, the two sensor coils 1 and 2 are arranged with the coil axis in alignment to each other.

In the context of the invention, the term "coil axis" is to be understood as corresponding to the directivity of an internal magnetic field H induced in each of the sensor coils 1 and 2. Specifically, the geometry of the magnetic permeable core 5 and 6 and the shape of the respective windings 9 and 10 define the directivity of the magnetic field H.

For simplicity, the schematic diagram of Fig. 1 limits illustration to a single of the two sensor coils 1 and 2 and also simplifies the position detection performed by the contactless position sensor 100. Nonetheless, the working principle of the contactless position sensor 100 shall be explained in connection with Fig. 1.

In the sensor coil 1 of the contactless position sensor 100, the windings 9 are arranged around the magnetic permeable core 5, such that a drive current I flowing through the windings 9 induces an internal magnetic field H1. The internal magnetic field H1 depends on the drive current I and on the geometry of the coil formed by the windings 9.

The internal magnetic field H1 is applied to the magnetic permeable core 5. Specifically, the internal magnetic field H1 evokes a magnetic flux density B1 within the magnetic permeable core 5. Depending on the applied internal magnetic field H1 induced with the windings 9, a resulting magnetic flux density B1 within the magnetic permeable core 5 varies, namely up to a saturation state of the magnetic permeable core 5.

In the context of the invention, saturation is the state reached in a magnetic permeable core when an increase in applied magnetic field H cannot increase the magnetization of the material further, so the total magnetic flux density B levels off. Advantageously, the use of a thin soft magnetic foil as magnetic permeable core 5 allows achieving saturation at very low field strength. For example, for a soft magnetic foil having a thickness around $25\mu m$, the field strength is around $4A/cm \sim 0.5mT$.

In the contactless position sensor 100, the saturation state of the magnetic permeable core 5 of sensor coil 1 is of particular importance. Specifically, a saturation state depends not only on the internal magnetic field H1 but is also affected by an external magnetic field $H_{ext}$.

In case the external magnetic field $H_{ext}$ has a same orientation as the internal magnetic field H1, both fields add up (constructively interact) within the magnetic permeable core 5 of the sensor coil 1 and result in the magnetic permeable core 5 being in a saturated state at a drive current I of smaller amplitude compared to the case without external magnetic field $H_{ext}$.

Similarly, in case the external magnetic field $H_{ext}$ has an opposite orientation as the internal magnetic filed H1, both fields subtract from each other (destructively interact) within the magnetic permeable core 5 of the sensor coil 1 such that a drive current I of higher amplitude is required for the magnetic permeable core 5 of the sensor coil 1 to be in a saturated state compared to the case without external magnetic field $H_{ext}$.

As can be acknowledged in this respect, the strength of an external magnetic field $H_{ext}$, and accordingly the position of a ferromagnetic target 20 deflecting (i.e. counteracting with) the external magnetic field $H_{ext}$, can be determined in connection with the drive current I required for the magnetic permeable core 5 of the sensor coil 1 to be in a saturated state.

Specifically, a transition between a non-saturated state and a saturated state of a magnetic permeable core 5 is identifiable in an electrical circuit 17, namely by way of detecting the electrical impedance of the sensor coil 1. This point of transition is generally known as "working point" of the sensor coil 1.

In more detail, a sensor coil 1 operated with the magnetic permeable core 5 in a non-saturated state has a relatively high impedance value (approx. 600 Ohm). The same sensor coil 1 operated with the magnetic permeable core 5 in a saturated state has a relatively low impedance value (approx. 60 Ohm).

A change between the non-saturated and the saturated state for sensor coil 1 is identifiable, for a predetermined drive current I, by the electrical circuit 17 detecting a change in voltage V across the sensor coil 1. In this respect, the electrical circuit 17 may determine the impedance of the sensor coil 1 as ratio of the voltage across the sensor coil 1 with respect to the predetermined drive current I.

In a more specific embodiment of the contactless position sensor 100, an advantageous drive current I is used for detection of a change in impedance indicating a transition between the non-saturated and the saturated state of the magnetic permeable core 5 of the sensor coil 1 more accurately.

In particular, the electrical circuit 17 of the contactless position sensor 100 drives the sensor coil 1 with a predetermined alternating current I. The predetermined alternating current I includes a low frequency current component $I_1$ and a high frequency current component $I_2$ and may be determined as: $I = I_1 + I_2$.

Exemplarily, the low frequency current component $I_1$ is controlled to have an amplitude level of 10 mA and to have a frequency of $f_1 = 1$ kHz; the high frequency current component $I_2$ is controlled to have an amplitude level of 1-2 mA and to have a frequency of $f_2 = 100$kHz.

The low frequency current component $I_1$ is set to drive the sensor coil 1 into a saturation state. Specifically, the low frequency current component $I_1$ is pre-determined to alternately drive the sensor coil 1 into a saturation state based on an internal magnetic field H1 of alternating polarity. Advantageously, core losses within the sensor coil 1 can thereby be reduced, e.g. hysteresis losses.

In this respect, the amplitude of the low frequency current component $I_1$ is predetermined to drive the magnetic permeable core 5 of the sensor coil 1 for variable external magnetic fields $H_{ext}$ into saturation.

Exemplarily, the amplitude of the low frequency current component $I_1$ is pre-determined based on an expected external magnetic field $H_{ext}$ generated in connection with the ferromagnetic target 20.

Further, the low frequency $f_1$ of the low frequency current component $I_1$ is set such that the impedance of the sensor coil 1 corresponds to (is dominated by) the DC characteristic (i.e. resistance of the wirings) of the sensor coil 1. In other words, the sensor coil 1 of the contactless position sensor 100 exhibits at the low frequency $f_1$ of the low frequency current component $I_1$ essentially DC characteristics.

Exemplarily, the low frequency $f_1$ of the low frequency current component $I_1$ is set such that the impedance of the sensor coil 1 corresponds to the DC resistance of the windings 9 (e.g. approximately 10 - 20 Ohm).

The high frequency current component $I_2$ is set for measuring the impedance of the sensor coil 1 of the contactless position detector 10. Accordingly, the high frequency component $I_2$ is different from the low frequency component $I_1$. A high frequency current component $I_2$ is used, since for high frequencies $f_2$ the sensor coil 1 may be approximated as ideal inductor L.

In this respect, for measuring the impedance of an ideal inductor L the following equation 1 is applicable:

$$v(t) = L \frac{di(t)}{dt} \text{ (equation 1).}$$

Accordingly, with a predefined alternating current $i(t) = I \cdot e^{j\omega t}$ as input, the impedance may be determined as amplitude ratio between a measured output voltage $v(t)$ and the predetermined alternating current $i(t)$ because the derivative of alternating current $i(t) = I \cdot e^{j\omega t}$ maintains the same amplitude.

Exemplarily, the high frequency $f_2$ of the high frequency current component $I_2$ is set based on the magnetic permeability of the sensor coil 1 such that the high frequency current component $I_2$ has a negligible effect on the magnetization of the magnetic permeable core 5 of the sensor coil 1.

In more detail, the commonly known skin effect generally expresses the relationship between magnetic penetration depth (skin depth) and the frequency of a current inducing an externally applied magnetic field. The relationship is given in the following equation 2:

$$\delta = \sqrt{\frac{2\rho}{\omega\mu}} \text{ (equation 2).}$$

$\delta$ is called the skin depth; $\rho$ corresponds to the resistivity; $\omega$ corresponds to the angular frequency; and $\mu = \mu_0 \cdot \mu_r$ corresponds to the absolute magnetic permeability, where $\mu_0$ denotes the constant permeability of free space and $\mu_r$ denotes the relative permeability of the medium.

Accordingly, based on the above equation 2 it can be readily appreciated that for higher frequencies $f = 2\pi \cdot \omega$, the magnetic penetration depth (skin depth $\delta$) reduces. Specifically, the high frequency of the high frequency current component $I_2$ induces an internal magnetic field H1 within the sensor coil 1 changing so rapidly that it is without effect on the magnetization of the magnetic permeable core 5 of the sensor coil 1.

Exemplary, for a foil type magnetic permeable core 5 in sensor coil 1 with relative permeability $\mu_r \gg 100'000$ , an externally applied magnetic field alternating with a frequency $50kHz < f_2 < 500kHz$ corresponds to a magnetic penetration depth (skin depth $\delta$) of few micrometers. Accordingly, in this example a high frequency current component $I_2$ inducing such an internal magnetic field has a negligible or no effect on the overall magnetization of the magnetic permeable core 5 of sensor coil 1.

Moreover, since the high frequency current component $I_2$ has limited effect on the magnetization of the magnetic permeable core 5 of the sensor coil 1, it is pre-determined to enable precise detection results of the impedance of the sensor coil 1 while at the same time reducing overall energy consumption of the contactless position sensor 100.

In this context, it shall be emphasized that if the high frequency $f_2$ of the high frequency current component $I_2$ is set to correspond to the resonance frequency of the sensor coil 1, then the overall energy consumption of the contactless position sensor 100 is minimized while at the same allowing for precise detection results.

In the context of the invention, resonance shall be understood as the tendency of a sensor coil to oscillate with greater amplitude at some frequencies than at others, whereas the resonance frequency is characterized as frequency of a maximum in the amplitude response.

Although sensor coil 1 may be approximated by an ideal inductor L as explained above, the actual sensor coil 1 suffers from parasitic effects, as e.g. parasitic capacitances that are due to the electric field between the turns of windings 9 which are at slightly different potentials. At high frequencies the capacitance begins to affect the sensor coil's behaviour; at some frequency, the sensor coil 1 behaves as a resonant circuit, i.e. becoming self-resonant.

Advantageously, in case the high frequency $f_2$ of the high frequency current component $I_2$ is set to correspond to the resonance frequency of the sensor coil 1, the sensor coil 1 behaves as LC resonator. A small amplitude of the high frequency current component $I_2$ (e.g. 1-2 mA) is set to result in a comparably high amplitude in the voltage across the sensor coil 1. Thereby, precise detection results are achieved within the contactless position sensor 100. Moreover, due to the small amplitude of the high frequency current $I_2$, the energy consumption of the contactless position sensor 100 is reduced.

Further, when providing the superposition of the low frequency current component $I_1$ and the high frequency current component $I_2$ to the sensor coil 1, the electrical circuit 17 determines a voltage level $V_1$ and $V_2$ across each of the two sensor coils 1 and 2, respectively.

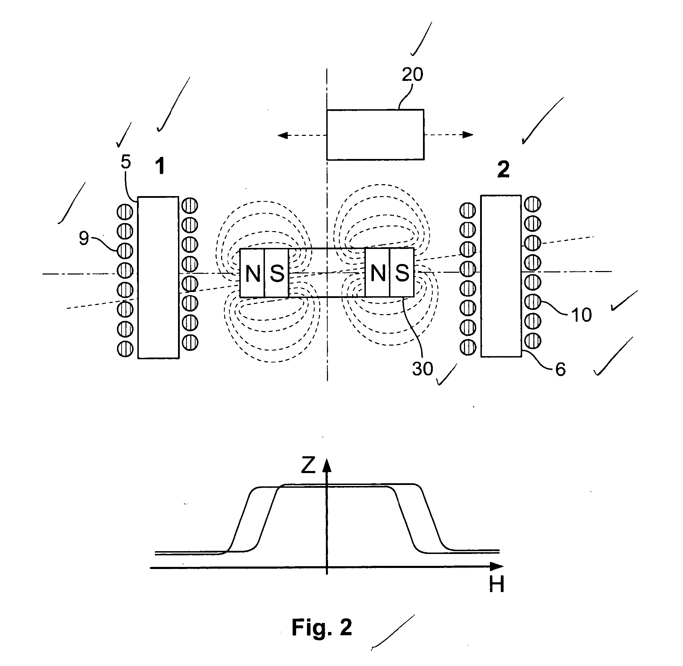

In more detail, the electrical circuit 17 detects the position of the ferromagnetic target 20 by subtracting amplitudes of high-frequency components of the two determined voltage levels $V_1$ and $V_2$ from each other, and by comparing the subtraction result to a pre-determined reference pattern. The detection of the position of the ferromagnetic target 20 will be explained in more detail in connection with Fig. 2

Exemplarily, the voltage level $V_1$ across sensor coil 1 is provided to a low-pass filter 21 and high-pass filter 22 included in the electrical circuit 17. The cut-off frequency of the low-pass filter 21 is configured based on the low frequency $f_1$ of the low frequency current component $I_1$. The cut-off frequency of the high-pass filter 22 is configured based on the high frequency $f_2$ of the high frequency current component $I_2$.

Accordingly, the low-pass filter 21 outputs a low frequency voltage component of the voltage $V_{1L}$ across the sensor coil 1. Similarly, the high-pass filter 22 outputs a high frequency voltage component of the voltage $V_{1H}$ across the sensor coil 1.

In more detail, in case the low frequency $f_1$ of the low frequency current component $I_1$ is set such that the impedance of the sensor coil 1 corresponds to (is dominated by) the DC characteristics of the sensor coil 1, a low frequency voltage component of the voltage $V_1$ essentially corresponds to the low frequency current component $I_1$ scaled by the DC resistance of the sensor coil 1.

In other words, in case the low frequency $f_1$ of the low frequency current component $I_1$ is set such that the sensor coil 1 exhibit essentially DC characteristics, the low frequency current component $I_1$ and the low frequency voltage component of voltage $V_1$ are approximately in phase to each other and differ only in the amplitude.

In more detail, in case of an predefined alternating current i(t) as input, the low frequency voltage component $V_{1L}$ of the determined voltage $V_1$ has approximately the same phase of the low frequency current component $I_1$ of the predefined alternating current i(t).

Accordingly, a zero voltage crossing in the low frequency voltage component $V_{1L}$ of the determined voltage $V_1$ indicates a change in polarity of the low frequency current component $I_1$ resulting in a change in direction of the internal magnetic field H1 induced in the sensor coil 1.

Further, in case the high frequency $f_2$ of the high frequency current component $I_2$ is set for measuring the impedance of the sensor coil 1 (e.g. high frequency $f_2$ is set based on the magnetic permeability of the sensor coil 1 or the high frequency $f_2$ is set to correspond to a resonance frequency of the sensor coil 1), the high frequency voltage component $V_{1H}$ of the voltage $V_1$ oscillates, having an amplitude envelope that corresponds to the impedance of the sensor coil 1.

In other words, the impedance of the sensor coil 1 may be determined based on a high frequency voltage component $V_{1H}$, of the voltage $V_1$, across the sensor coil 1. Specifically, the impedance of the sensor coil 1 is directly proportional to the amplitude level of the high frequency voltage component $V_{1H}$ of the voltage $V_1$, across the sensor coil 1.

Accordingly, in case the high frequency current component $I_2$ is set with the high frequency $f_2$, a substantial voltage drop/voltage increase in the amplitude envelope of the high frequency voltage component indicates a transition between the non-saturated and the saturated state of magnetic permeable core 5 of the sensor coil 1 and vice-versa.

Consequently, for a determined voltage $V_1$ across the sensor coil 1, the low frequency voltage component $V_{1L}$ thereof allows for the electrical circuit 17 to detect a polarity of the internal magnetic field H1 induced in the sensor coil 1; whereas the amplitude envelope of the high frequency voltage component $V_{1H}$ of same determined voltage $V_1$ allows for the electrical circuit 17 to detect a transition between the non-saturated and the saturated state of magnetic permeable core 5 of the sensor coil 1 with respect to the induced internal magnetic field H1.

In other words, the electrical circuit 17, by referring to the low frequency voltage component $V_{1L}$ of the determined voltage $V_1$, can distinguish between polarities of the induced internal magnetic field H1. Further, the electrical circuit 17, by referring to the high frequency voltage component $V_{1H}$ of the determined voltage $V_1$, can identify for the induced internal magnetic field H1 in the sensor coil 1 whether or not the magnetic permeable core 5 of the sensor coil 1 is in a saturated state.

Now, in case of an external magnetic field $H_{ext}$, the electrical circuit 17, by referring to the high frequency voltage component $V_{1H}$ of the determined voltage $V_1$, may identify that the transition between non-saturated and saturated state of the magnetic permeable core 5 of the sensor coil 1 happens earlier, namely happens for smaller low frequency voltage components $V_{1L}$ of the determined voltage V1, in case the external magnetic field $H_{ext}$ and the induced internal magnetic field H1 have same polarities.

At the same time, the electrical circuit 17, by referring to the high frequency voltage component $V_{1H}$ of the determined voltage $V_1$, may identify that the transition between non-saturated and saturated state of the magnetic permeable core 5 of the sensor coil 1 happens later, namely happens for smaller low frequency voltage components $V_{1L}$ of the determined voltage $V_1$, in case the external magnetic field $H_{ext}$ and the induced internal magnetic field H1 have opposite polarities.

As exemplified in Fig. 1, the above described dependencies between the low frequency voltage component $V_{1L}$ and the amplitude envelope of the high frequency voltage component $V_{1H}$ of the determined voltage $V_1$ across sensor coil 1 may be combined in a voltage plot (inverse U-shaped plot).

Specifically, the voltage plot features low frequency voltage components $V_{1L}$ of the determined voltage $V_1$ on an X-axis and an amplitude envelope of the high frequency voltage components $V_{1H}$ of the same determined voltage $V_1$ on a Y-axis. In other words, for any point in time, the low frequency voltage component $V_{1L}$ and the corresponding amplitude envelope of the high frequency component $V_{1H}$ are plotted as point (x,y) in the voltage plot.

Accordingly, a positive section of the X-axis of the voltage plot corresponds to a positive low frequency voltage component $V_{1L}$ of the determined voltage $V_1$ indicating one polarity of the induced internal magnetic field H1 in the sensor coil 1. Similarly, a negative section of the X-axis of the voltage plot corresponds to a negative low frequency voltage component $V_{1L}$ of the determined voltage $V_1$ indicating an opposite polarity of the induced internal magnetic field H1 in the sensor coil 1.

Further, a Y-axis of the voltage plot corresponds to the high frequency voltage component $V_{1H}$ of the determined voltage $V_1$ having an amplitude envelope that corresponds to the impedance of the sensor coil 1. Accordingly, a substantial voltage drop/voltage increase on the Y-axis of the voltage plot indicates a transition between the non-saturated and the saturated state of the sensor coil 1 and vice-versa.

Advantageously, in case of an external magnetic field $H_{ext}$, the high frequency voltage component $V_{1H}$ of the determined voltage $V_1$ indicates an earlier / later transition between non-saturated and saturated state, for the respective low frequency voltage component $V_{1L}$ of the determined voltage $V_1$ identifying an internal magnetic field H1 of the same polarity / opposite polarity as that of the external magnetic filed $H_{ext}$.

Accordingly, depending on the polarity of the external magnetic field $H_{ext}$, the voltage plot is "shifted" in a left or right direction, as compared to the case without external magnetic field $H_{ext}$. In other words, based on the polarity of the external magnetic field $H_{ext}$, the high frequency voltage component $V_{1H}$ of the determined voltage $V_1$ is "shifted" with respect to the low frequency voltage component $V_{1L}$ of the determined voltage $V_1$, as compared to the case without external magnetic field $H_{ext}$.

Referring now to Fig. 2, a contactless position sensor 200 according to a second embodiment of the invention is illustrated in connection with the ferromagnetic target 20.

The contactless position sensor 200 according to the second embodiment comprises the two sensor coils 1 and 2 and the electrical circuit 17 as already described with respect to the first embodiment.

As outlined in connection with the first embodiment, the contactless position sensor 200, comprises two sensor coils 1 and 2 each comprising a magnetic permeable core 5 and 6 and windings 9 and 10 surrounding the magnetic permeable core 5 and 6 defining a coil axis.

In the contactless position sensor 200, the two sensor coils 1 and 2 are arranged such that the coil axes are essentially in parallel to each other. For the definition of the term "coil axis" of each of the two sensor coils 1 and 2 it is here referred to the description already provided with respect to the first embodiment.

In other words, the sensor coils 1 and 2 of the contactless position sensor 200 point with their coil axes in a same direction, i.e. with one end of each of the sensor coil 1 and 2 facing a space for the movement of the ferromagnetic target 20. The movement of the ferromagnetic target 20 is in a direction across with respect to each of the two coil axes. In other words, the contactless position sensor 200 can detect a position of the ferromagnetic target 20 when moved between positions where it is facing the ends 13 and 14 of each of the two sensor coils 1 and 2.

Advantageously, the sensor coils 1 and 2 are arranged within the contactless position sensor 200 such that the one end of each of the sensor coils 1 and 2, namely the end facing the space, are in alignment to each other. In other words, it is beneficial if both of the one ends of each of the sensor coils 1 and 2 directly border the space (i.e. no longitudinal offset) for the movement of the ferromagnetic target 20 (e.g. no offset in the direction of the coil axes).

The electrical circuit 17 of the contactless position sensor 200 separately drives the predetermined alternating current I within each of two sensor coils 1 and 2. For conciseness, it shall be only referred to the first embodiment for the definition of the predetermined alternating current I.

The electrical circuit 17 of the contactless position sensor 200 further determines a high frequency voltage component $V_{1H}$ and $V_{2H}$ of a voltage $V_1$ and $V_2$ across each of the two sensor coils 1 and 2. Then, the electrical circuit 17 subtracts amplitude levels of the high frequency voltage components $V_{1H}$ and $V_{2H}$ of the determined two voltages $V_1$ and $V_2$ across the respective two sensor coils 1 and 2.

In case of an external magnetic field $H_{ext}$, one of the high frequency voltage components $V_{1H}$ or $V_{2H}$ of the determined voltages $V_1$ or $V_2$ is shifted with respect to the low frequency voltage component $V_{1L}$ or $V_{2L}$ of the determined voltage $V_1$ or $V_2$, whereas the other high frequency voltage components $V_{2H}$ or $V_{1H}$ of the determined voltages $V_2$ or $V_1$ is not shifted. Accordingly, the subtraction result determined by the electrical circuit 17 identifies the shift by way of difference pattern.

Accordingly, the contactless position sensor 200 may detect the position of a ferromagnetic target 20, resulting in a deflection of an external magnetic field $H_{ext}$, by the electrical circuit 17 comparing the subtraction result to a pre-determined reference pattern.

As mentioned above, the electrical circuit 17 drives the two sensor coils 1 and 2 with the predetermined alternating current I having a same phase. In this case, a shift of one of the high frequency voltage components $V_{1H}$ or $V_{2H}$ of the determined voltages $V_1$ or $V_2$ with respect to other high frequency voltage components $V_{2H}$ or $V_{1H}$ of the determined voltages $V_2$ or $V_1$ can be identified by way of subtraction of amplitude levels as noted above.

In case the electrical circuit 17 drives the two sensor coils 1 and 2 with the predetermined alternating current I having different phases (i.e. having a phase offset therebetween), the electrical circuit 17 is required to first compensate for the phase offset and then subtract phase-compensated amplitude levels of the high frequency voltage components $V_{1H}$ and $V_{2H}$ of the determined two voltages $V_1$ and $V_2$ across the respective two sensor coils 1 and 2, in order to detect a shift in one of the high frequency voltage components.

In more detail, the contactless position sensor 200 may further comprise a phase detector 13 for detecting a phase-offset between two low frequency voltage components $V_{1L}$ and $V_{2L}$ of the determined voltages $V_1$ and $V_2$ across the respective two sensor coils 1 and 2. Then, based on the detected phase-offset, one of the two determined high frequency voltage components $V_{1H}$ and $V_{2H}$ is shifted (i.e. time-shifted) with respect to the other of the two determined high frequency voltage components $V_{1H}$ and $V_{2H}$ before subtracting from each other an amplitude level of the two high frequency voltage components $V_{1H}$ and $V_{2H}$.

Thereby, an early or a late transition between a non-saturated and a saturated state of one sensor coil 1 or 5 with respect to the other sensor coil 5 or 1, by subtracting amplitude levels of a same phase of high-frequency voltage components $V_{1H}$ and $V_{2H}$ of the two determined voltages $V_1$ and $V_2$ from each other.

In a more detailed example, the electrical circuit 17 of the contactless position sensor 200 determines an amplitude envelope of the high frequency voltage component of each of the determined voltages $V_1$ and $V_2$ before subtracting amplitude levels of high-frequency voltage components $V_{1H}$ and $V_{2H}$ of the two determined voltages $V_1$ and $V_2$ from each other.

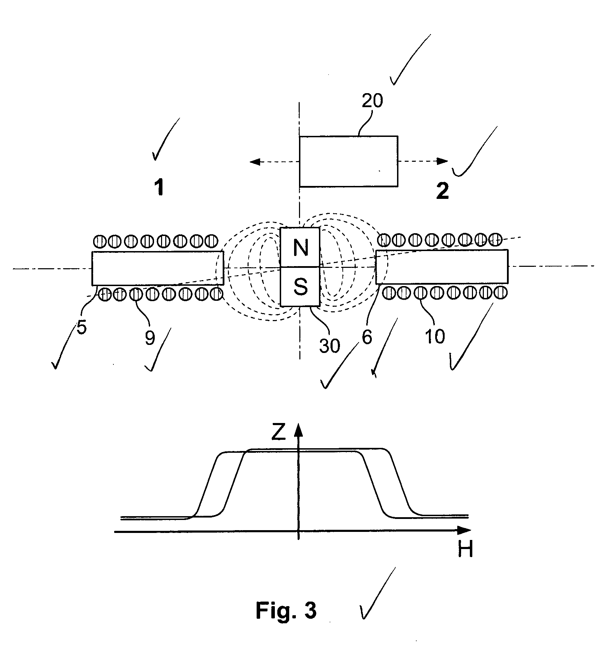

Referring now to Fig. 3, a contactless position sensor 300 according to a third embodiment of the invention is illustrated in connection with the ferromagnetic target 20.

The contactless position sensor 300 according to the third embodiment comprises the two sensor coils 1 and 2 and the electrical circuit 17 as already described with respect to the first and second embodiment.

As outlined in connection with the first and second embodiment, the contactless position sensor 300, comprises two sensor coils 1 and 2 each comprising a magnetic permeable core 5 and 6 and windings 9 and 10 surrounding the magnetic permeable core 5 and 6 defining a coil axis.

In the contactless position sensor 300, the two sensor coils 1 and 2 are arranged such that the coil axes are essentially in alignment (i.e. axial alignment) to each other. For the definition of the term "coil axis" of each of the two sensor coils 1 and 2 it is here referred to the description already provided with respect to the first embodiment.

In other words, the sensor coils 1 and 2 of the contactless position sensor 200 are consecutively arranged on a longitudinal axis, i.e. with one end (i.e. close end) of each of the sensor coils 1 and 2 pointing towards each other and with the other end (i.e. distant end) of each of the sensor coils 1 and 2 pointing away from each other.

The distant ends of each of the sensor coils 1 and 2 restrict a space for the movement of the ferromagnetic target 20. Specifically, the ferromagnetic target 20 may move alongside of the two sensor coils 1 and 2, however, not beyond the distant ends of the sensor coils 1 and 2.

Thereby it can be ensured that at least one of the sensor coils 1 and 2 senses a change in the external magnetic field $H_{ext}$. The movement of the ferromagnetic target 20 is in a direction essentially in parallel with respect to each of the two coil axes. In other words, the contactless position sensor 300 can detect a position of the ferromagnetic target 20 when moved between positions at the distant ends of each of the two sensor coils 1 and 2.

Advantageously, the sensor coils 1 and 2 are arranged within the contactless position sensor 200 such that the coil axis of the sensor coils 1 and 2 are planar, e.g. are within one plane. In other words, it is beneficial if the sensor coils 1 and 2 directly border the space (i.e. no lateral offset) for the movement of the ferromagnetic target 20 (e.g. no offset in the direction across with respect to the coil axes).

The electrical circuit 17 of the contactless position sensor 200 separately drives the predetermined alternating current I within each of two sensor coils 1 and 2. For conciseness, it shall be only referred to the first and second embodiment for the definition of the predetermined alternating current I.

The electrical circuit 17 of the contactless position sensor 200 further determines a high frequency voltage component $V_{1H}$ and $V_{2H}$ of a voltage $V_1$ and $V_2$ across each of the two sensor coils 1 and 2. Then, the electrical circuit 17 subtracts amplitude levels of the high frequency voltage components $V_{1H}$ and $V_{2H}$ of the determined two voltages $V_1$ and $V_2$ across the respective two sensor coils 1 and 2.

In case of an external magnetic field $H_{ext}$, one of the high frequency voltage components $V_{1H}$ or $V_{2H}$ of the determined voltages $V_1$ or $V_2$ is shifted with respect to the low frequency voltage component $V_{1L}$ or $V_{2L}$ of the determined voltage $V_1$ or $V_2$, whereas the other high frequency voltage components $V_{2H}$ or $V_{1H}$ of the determined voltages $V_2$ or $V_1$ is not shifted. Accordingly, the subtraction result determined by the electrical circuit 17 identifies the shift by way of difference pattern.

Accordingly, the contactless position sensor 300 may detect the position of a ferromagnetic target 20, resulting in a deflection of an external magnetic field $H_{ext}$, by the electrical circuit 17 comparing the subtraction result to a pre-determined reference pattern.

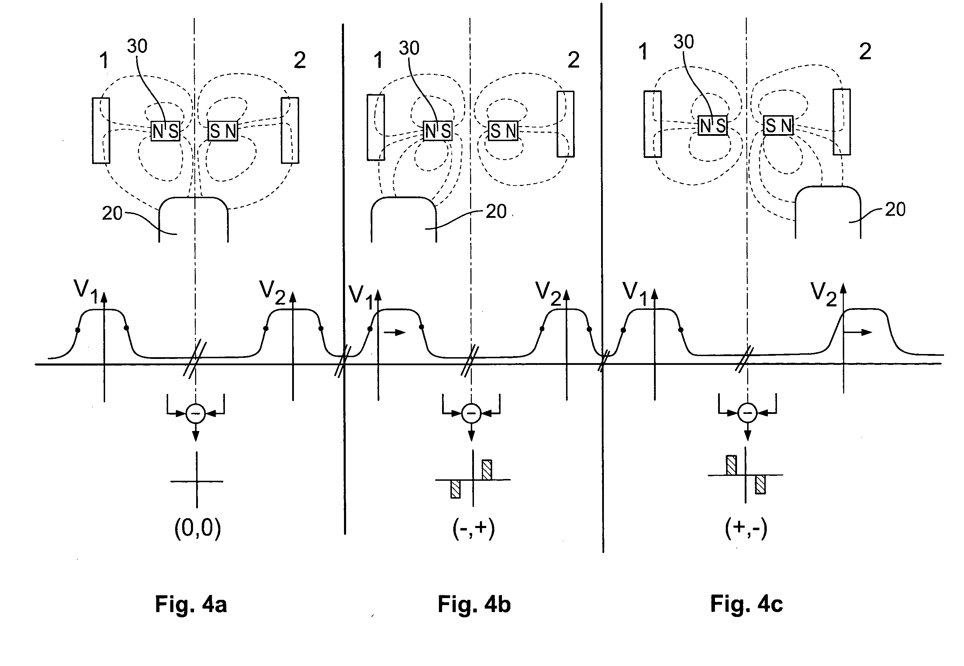

Referring now to Figs. 4a - 4c, the operation of the contactless position sensor according to any of the previously described embodiments shall be exemplified. In particular, the operation of the contactless position sensor 200 according to the second embodiment is shown for different positions of a ferromagnetic target.

The contactless positions sensor 200 illustrated in Figs. 4a - 4c, additionally includes a permanent magnet 30. The permanent magnet 30 is positioned in-between the two sensor coil 1 and 2. Thereby, the two sensor coils 1 and 2 are exposed to an external magnetic filed $H_{ext}$ generated by the permanent magnet 30. Further, the permanent magnet 30 is positioned such that the generated external magnetic field $H_{ext}$ is essentially perpendicular with respect to each of the two coil axes.

According to an exemplary realization of the contactless position sensor 200, the permanent magnet 30 is realized as radial magnetized permanent magnet. Accordingly, the permanent magnet 30 is ring shaped with an outside section of one polarity (e.g. North Pole) and an inside section of the other polarity (e.g. South Pole). For example, a closed loop path of magnetic flux originates from the permanent magnet 30, is focussed by the magnetic permeable core 5 or 6 of one sensor coil 1 or 5 and is directed back into the permanent magnet 30.

According to another exemplary realization of the contactless position sensor 200, the permanent magnet 30 is realized as bar-type permanent magnet. The permanent magnet 30 has a cuboid or cylindrical shape with one end of one polarity (e.g. North Pole) and the other end of the other polarity (e.g. South Pole). In this example, the permanent magnet 30 is advantageously arranged in-between the two sensor coils 1 and 2 such that its ends point towards the sensor coils 1 and 2, respectively.

For a negligible/balanced magnetic flux density B within each of the sensor coils 1 and 2 it is advantageous for the permanent magnet 30 to be positioned within a plane defined by the centre of the two sensor coils 1 and 2. In this respect, in each of the magnetic permeable cores 5 and 6 of the respective sensor coils 1 and 2 equal amounts of magnetic flux are flowing in opposite directions, such that the overall magnetic flux density B within each of the two sensor coils 1 and 2 is approximately zero.

Nevertheless, it can be readily appreciated that for different positions of the permanent magnet 30 with respect to sensor coil 1 and 2, the electrical circuit 17 may compensate for the positioning of the permanent magnet 30 by supplying the sensor coils 1 and 2 with an additional direct current.

Specifically, in case of displacement of the permanent magnet 30 to a position outside of the plane defined by the centre of the two sensor coils 1 and 2, the electrical circuit 17 may supply the sensor coils 1 and 2 with a compensating direct current having, for the two sensor coils 1 and 2, a same direct current offset.

In case of displacement of the permanent magnet 30 to a position no longer equidistant from the two sensor coils 1 and 2, the electrical circuit 17 supplies the sensor coils 1 and 2 with a compensating direct current having, for the two sensor coils 1 and 2, a direct current offsets of opposite polarity.

Further, Figs. 4a - 4c show the ferromagnetic target 20 together with the contactless position sensor 200. The ferromagnetic target 20 may have a cuboid or cylindrical shape wherein a length of the front face of the ferromagnetic target 20 (i.e. side facing the contactless position sensor 200) is approximately half the distance between the two sensor coils 1 and 2. This geometry of the ferromagnetic target 20 has in practice provided for superior detection results together with the described contactless position sensor 200.

As shown in Figs. 4a - 4c, the ferromagnetic target 20 is to be moved in front of the sensor coils 1 and 2, namely across (e.g. perpendicular direction) with respect to each of the coil axes. Specifically, the ferromagnetic target 20 is to be moved within a space that is faced by one end 13 and 14 of each of the two sensor coils 1 and 2. In other words, the contactless position sensor 200 can detect a position of the ferromagnetic target 20 when moved between positions where it is facing the ends 13 and 14 of each of the two sensor coils 1 and 2.

When the ferromagnetic target 20 is moved across with respect to the coil axes, it may be positioned a) at equal distance to both sensor coils 1 and 2, b) in front of sensor coil 1 and c) in front of sensor coil 2. The positions b) and c) correspond to the boundary of the space within which the ferromagnetic target 20 is to be moved. In other words, in case the ferromagnetic target 20 is moved further outward with respect to the two sensor coils 1 and 2, detection of the position of the ferromagnetic target 20 is no longer possible.

In Fig. 4a, the ferromagnetic target 20 is shown at equal distance between the two sensor coils 1 and 2. In this position, the ferromagnetic target 20 has a negligible effect on the magnetic flux density B within the sensor coils 1 and 2. Accordingly, the voltage plots for the respective sensor coils 1 and 2 are symmetrical, and when the electrical circuit 17 subtracts amplitude levels of the high frequency voltage components $V_{1H}$ and $V_{2H}$ of the determined two voltages $V_1$ and $V_2$ across the respective two sensor coils 1 and 2 it cannot detect a shift to one or the other side. The subtraction result is indicated with (0,0).

In Fig. 4b, the ferromagnetic target 20 is shown in front of sensor coil 1. In this position, the ferromagnetic target 20 has a negligible effect on the magnetic flux density B within the sensor coil 2 but has a substantial effect on the magnetic flux density B within the sensor coil 1. Accordingly, the voltage plot for sensor coil 2 is symmetrical, whereas the voltage plot for sensor coil 1 is shifted in a rightward direction (cf. arrow to the right).

In this case, when the electrical circuit 17 subtracts amplitude levels of the high frequency voltage components $V_{1H}$ and $V_{2H}$ of the determined two voltages $V_1$ and $V_2$ across the respective two sensor coils 1 and 2 a shift of the high frequency voltage component $V_{1H}$ of the determined voltage $V_1$ with respect to the other high frequency voltage component $V_{2H}$ of the determined voltage $V_2$ is detectable. The subtraction result is indicated with (-,+).

In Fig. 4c, the ferromagnetic target 20 is shown in front of sensor coil 2. In this position, the ferromagnetic target 20 has a negligible effect on the magnetic flux density B within the sensor coil 1 but has a substantial effect on the magnetic flux density B within the sensor coil 1. Accordingly, the voltage plot for sensor coil 1 is symmetrical, whereas the voltage plot for sensor coil 1 is shifted in a rightward direction (cf. arrow to the right).

In this case, when the electrical circuit 17 subtracts amplitude levels of the high frequency voltage components $V_{1H}$ and $V_{2H}$ of the determined two voltages $V_1$ and $V_2$ across the respective two sensor coils 1 and 2 a shift of the high frequency voltage component $V_{2H}$ of the determined voltage $V_2$ with respect to the other high frequency voltage component $V_{1H}$ of the determined voltage $V_1$ is detectable. The subtraction result is indicated with (+,-).

In all three cases, the electrical circuit 17 of the contactless position sensor 200 may detect the to detect the position of the ferromagnetic target 20 by subtracting from each other amplitude levels of the high frequency voltage components $V_{1H}$ and $V_{2H}$ of two of the determined voltages $V_1$ and $V_2$ across the respective two sensor coils 1 and 2, and by comparing the subtraction result to a pre-determined reference pattern.

As can be readily appreciated from the description above, contactless position sensors not only work with two sensor coils 1 and 2 but also contactless position sensors with three, four or even more sensor coils are conceivable.

In case of a contactless position sensor with three sensor coils, same sensor coils could be positioned in a linear or in a triangular arrangement. In case the ferromagnetic target would face or would be positioned in close proximity to one of the three sensor coils, a high frequency voltage component of a determined voltage across same sensor coil would be shifted with respect to high frequency voltage component of a determined voltage across the other two sensor coils.

Accordingly, also in this case by way of subtraction of high frequency voltage components of two determined voltages, a position of a ferromagnetic target could be detected in the contactless position sensor.

In the following, a contactless position sensor including four sensor coils is described. This contactless position sensor may be advantageously used for gear detection in a gear box of a motor vehicle. Specifically, in the illustrated configuration the contactless position sensor allows for detection of rotary and translational movements of the ferromagnetic target.

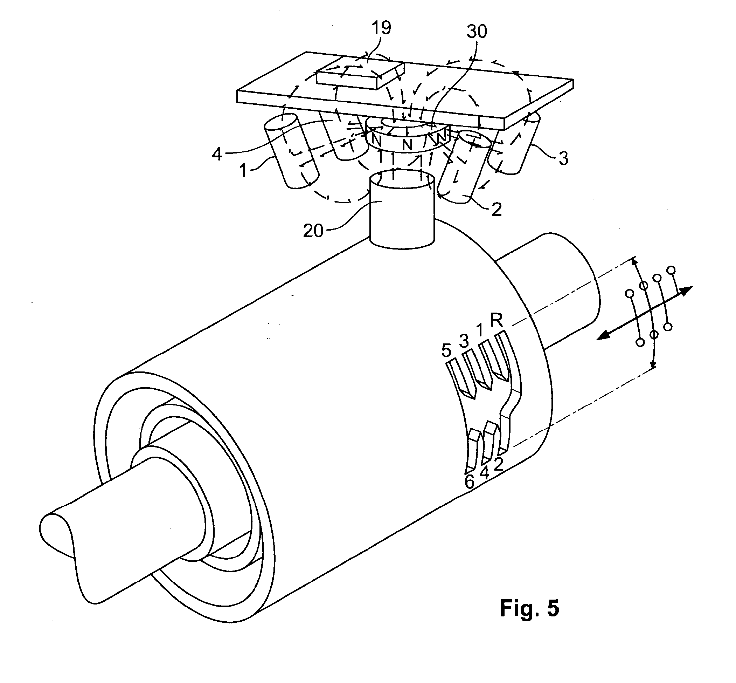

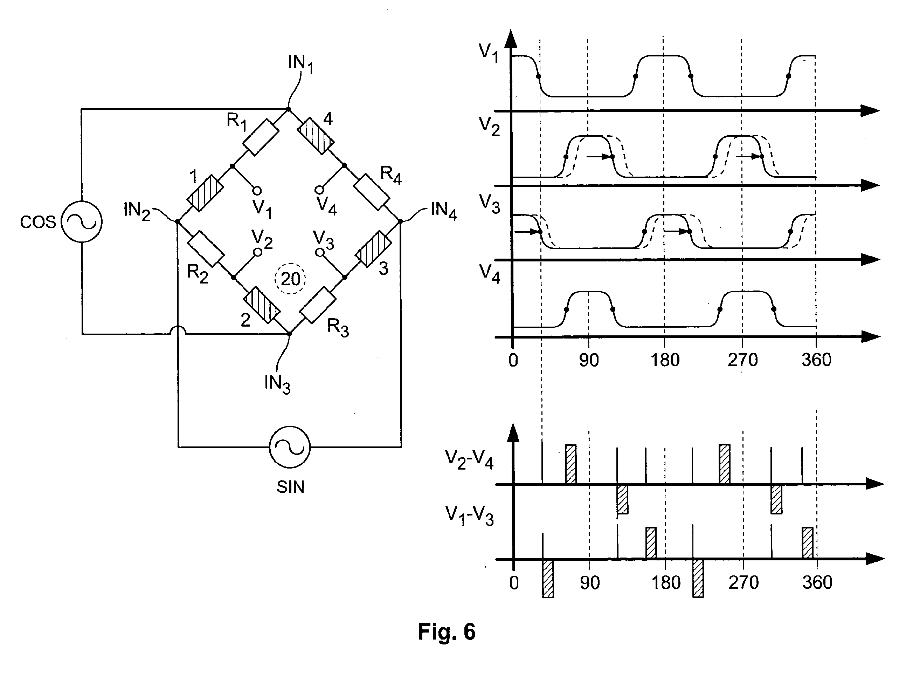

Referring now to Figs. 5 and 6, a contactless position sensor 400 according to a fourth embodiment of the invention is illustrated in connection with the ferromagnetic target 20.

The contactless position sensor 400 according to the fourth embodiment comprises four sensor coils 1, 2, 3 and 4 and the electrical circuit 17 as already described with respect to the first, second or third embodiment. Within the contactless position sensor 400, the four sensor coils 1, 2, 3 and 4 are arranged in a square shape. In other words, the four sensor coils 1, 2, 3 and 4 are respectively positioned at the corners of a square forming the geometry of the contactless position sensor 400.

Similarly to the first, second and third embodiment, the contactless position sensor 400, includes the four sensor coils 1, 2, 3 and 4, each comprising a magnetic permeable core 5, 6, 7 and 8 and windings 9, 10, 11 and 12 surrounding the magnetic permeable core 5, 6, 7 and 8 defining a coil axis. In the contactless position sensor 400, the four sensor coils 1, 2, 3 and 4 are arranged such that the coil axes are essentially in parallel to each other.

In this respect, the sensor coils 1, 2, 3 and 4 of the contactless position sensor 400 point with their coil axes in a same direction, i.e. with one end of each of the sensor coil 1, 2, 3 and 4 facing a space for the movement of the ferromagnetic target 20. In other words, the contactless position sensor 400 can detect a position of the ferromagnetic target 20 when moved between positions where it is facing the ends of each of the sensor coil 1, 2, 3 and 4.

Additionally, a series resistor $R_1$, $R_2$, $R_3$ and $R_4$ is provided for each of the four sensor coils 1, 2, 3 and 4. In more detail, each of the series resistors $R_1$, $R_2$, $R_3$ and $R_4$ is connected in series to the respective sensor coil 1, 2, 3 and 4 in order to form a series circuit. The four series circuits are inter-connected to form a bridge circuit including for input terminals $IN_1$, $IN_2$, $IN_3$ and $IN_4$.

The electrical circuit 17 supplies the inputs $IN_1$, $IN_2$, $IN_3$ and $IN_4$ of the bridge circuit with a zero-degree phase-shifted and a 90-degree phase-shifted version of the predetermined alternating current I. For conciseness, it shall be only referred to the first, second and third embodiment for the definition of the predetermined alternating current I. The term "phase-shift" refers to a phase-shift with respect to the low-voltage current component $I_1$ included in the predetermined alternating current I.

Exemplarily, in case the zero-degree phase-shifted version of the predetermined alternating current I includes the low-voltage current component $I_1$ having a sine shape, then the 90-degree phase-shifted version of the predetermined alternating current I includes the low-voltage current component $I_1$ having a cosine shape.

In more detail, the electrical circuit 17 is configured to drive between the first and third input terminal $IN_1$ and $IN_3$ of the bridge circuit the zero-degree phase shifted version of the predetermined alternating current I. Similarly, the electrical circuit 17 is configured to drive between the first and third input terminal $IN_1$ and $IN_3$ of the bridge circuit the zero-degree phase shifted version of the predetermined alternating current I.

Specifically, the electrical circuit 17 is adapted to symmetrically supply the zero-degree and 90-degree phase-shifted version of the predetermined alternating current I. In other words, the electrical circuit 17 is configured to supply one input terminal with a positive version and the other input terminal with a negative version of either the zero-degree or the 90-degree phase-shifted predetermined alternating current I.

In this respect, one may also say that the electrical circuit 17 is adapted to supply the first input terminal $IN_1$ with a zero-degree phase shifted version, the second input terminal $IN_2$ with a 90-degree phase shifted version, the third input terminal $IN_3$ with a 180-degree phase shifted version, and the input terminal $IN_4$ with a 270-degree phase shifted version of the predetermined alternating current I.

Accordingly, the 180-degree phase-shifted version corresponds to a negative zero-degree phase shifted version of the predetermined alternating current I. Similarly, the 270-degree phase shifted version corresponds to a negative 90-degree phase shifted version of the predetermined alternating current I.

Further, the bridge circuit is to be described in more detail:

The first series circuit (of series resistor $R_1$ and sensor coil 1) is connected between a first and second input terminal $IN_1$ and $IN_2$; the second series circuit (of series resistor $R_2$ and sensor coil 2) is connected between the second and third input terminal $IN_2$ and $IN_3$; the third series circuit (of series resistor $R_3$ and sensor coil 3) is connected between the third and fourth input terminal $IN_3$ and $IN_4$; and the fourth series circuit (of series resistor $R_4$ and sensor coil 4) is connected between the fourth and first input terminal $IN_4$ and $IN_1$.

Accordingly, each series circuit, formed of the series resistor $R_1$, $R_2$, $R_3$ and $R_4$ and the respective sensor coil 1, 2, 3 and 4, is supplied by the electrical circuit 17 with one of a zero-degree, a 90-degree, a 180-degree and a 270-degree phase-shifted version of the predetermined alternating current I.

In the bridge circuit, each of the four series circuits is provided with a centre tap connection for the electrical circuit 17 to determine the voltage across the respective of the four sensor coils 1, 2, 3 and 4.

Exemplary, the first series circuit of series resistor $R_1$ and sensor coil 1 is provided with a centre tap connection in-between the series resistor $R_1$ and the sensor coil 1. Accordingly, in case the electrical circuit 17 drives the series circuit with the different versions of the predetermined alternating current I, the centre tap connection provides a voltage $V_1$ across the sensor coil 1.

Accordingly, by way of the four centre tap connections, the electrical circuit 17 is adapted to for determining a high frequency voltage component $V_{1H}$, $V_{2H}$, $V_{3H}$ and $V_{4H}$ of a voltage $V_1$, $V_2$, $V_3$ and $V_4$ across each of the four sensor coils 1, 2, 3 and 4.

Then, the electrical circuit 17 subtracts amplitude levels of the high frequency voltage components $V_{1H}$ and $V_{3H}$ of the determined two voltages $V_1$ and $V_3$ across the respective two sensor coils 1 and 3 that are supplied with the zero-degree and the 180-degree phase-shifted version of the predetermined alternating current I and subtracts amplitude levels of the high frequency voltage components $V_{2H}$ and $V_{4H}$ of the determined voltages $V_2$ and $V_4$ across the respective two sensor coils 2 and 4 that are supplied with the 90-degree and the 270-degree version of the predetermined alternating current I.

Accordingly, the electrical circuit 17 subtracts amplitude levels of voltages across two sensor coils that are diagonally positioned in the square arrangement. In other words, for the contactless position sensor 400 having the four sensor coils 1, 2, 3 and 4 arranged at corners of a square, the electrical circuit 17 subtracts amplitude levels of high frequency voltage components of the determined voltages across two sensor coils that are arranged at diagonal corners.

In this respect, the electrical circuit 17 advantageously determines a subtraction result for sensor coils that are positioned farthest apart. Thereby, it can be ensured that when one of the high-frequency voltage component of a determined voltage across one sensor coil is shifted due to its proximity to the ferromagnetic target 20, the other one of the high-frequency voltage component of a determined voltage across one sensor coil is not-shifted (remains symmetrical) due to its far distance from the ferromagnetic target 20.

The electrical circuit 17 of the contactless position sensor 400 is adapted to detect the position of the ferromagnetic target 20 by respectively comparing the subtraction results to a pre-determined reference pattern.

Consequently, superior detection results of the ferromagnetic target 20 can be achieved by the contactless position sensor 400.

Referring now to the specific position of the ferromagnetic target 20 with respect to the contactless position sensor 400 indicated in Fig. 6:

In Fig. 6, the ferromagnetic target is shown at close proximity to sensor coils 2 and 3. In this position the ferromagnetic target 20 has a negligible effect on the magnetic flux density B within the sensor coils 1 and 4, but has a substantial effect on the magnetic flux density B within the sensor coils 2 and 3 due to the close proximity.

In this case, the high frequency voltage components $V_{2H}$ and $V_{3H}$ of the determined voltages $V_2$ and $V_3$ are shifted with respect to the low frequency voltage components $V_{2L}$ or $V_{3L}$ of the determined voltage $V_2$ or $V_3$, whereas the other high frequency voltage components $V_{1H}$ and $V_{4H}$ of the determined voltages $V_1$ and $V_4$ are not shifted. Accordingly, the voltage plots for sensor coils 1 and 4 are symmetrical, whereas the voltage plots for sensor coils 2 and 3 are shifted in a rightward direction (cf. arrow to the right).

Further, when the electrical circuit 17 subtracts from each other amplitude levels of the high frequency voltage components $V_{1H}$ and $V_{3H}$ of the determined two voltages $V_1$ and $V_3$ across the respective two sensor coils 1 and 3; a shift of the high frequency voltage component $V_{3H}$ of the determined voltage $V_3$ with respect to the other high frequency voltage component $V_{1H}$ of the determined voltage $V_1$ is detectable. The subtraction result is indicated with (-,+,-,+).

At the same time, when the electrical circuit 17 subtracts from each other amplitude levels of the high frequency voltage components $V_{2H}$ and $V_{4H}$ of the determined two voltages $V_2$ and $V_4$ across the respective two sensor coils 2 and 4, a shift of the high frequency voltage component $V_{2H}$ of the determined voltage $V_2$ with respect to the other high frequency voltage component $V_{4H}$ of the determined voltage $V_4$ is also detectable. The subtraction result is indicated with (+,-,+,-)

Thereafter, the subtraction results determined by the electrical circuit 17 identify the shift by way of comparison to a pre-determined reference pattern.

Accordingly, the contactless position sensor 400 may detect the position of a ferromagnetic target 20, resulting in a deflection of an external magnetic field $H_{ext}$, by the electrical circuit 17 comparing the subtraction results to a pre-determined reference pattern.

In a more detailed example, the electrical circuit 17 of the contactless position sensor 400 determines an amplitude envelope of the high frequency voltage component of each of the determined voltages $V_1$, $V_2$, $V_3$ and $V_4$ before subtracting amplitude levels of high-frequency voltage components of the two determined voltages $V_1$ and $V_3$ from each other and before subtracting amplitude levels of high-frequency voltage components of the two determined voltages $V_2$ and $V_4$ from each other.

For a negligible/balanced magnetic flux density B within each of the sensor coils 1, 2, 3 and 4 it is advantageous for the permanent magnet 30 to be positioned within a plane defined by the centre of the four sensor coils 1, 2, 3 and 4.

In this respect, in each of the magnetic permeable cores 5, 6 7 and 8 of the respective sensor coils 1, 2, 3 and 4 equal amounts of magnetic flux are flowing in opposite directions such that the overall magnetic flux density B within each of the four sensor coils 1, 2, 3 and 4 is approximately zero.

Nevertheless, it can be readily appreciated that for different positions of the permanent magnet 30 with respect to sensor coil 1, 2, 3 and 4, the electrical circuit 17 may compensate for the positioning of the permanent magnet 30 by supplying the sensor coils 1, 2, 3 and 4 with an additional direct current.

Furthermore, the electrical circuit 17 may also be adapted supply a direct current to each of the four sensor coils 1, 2, 3 and 4 in order to compensate for a temperature drift in the sensor coils.

In summary, the above described contactless position sensor or contactless position sensor system has many advantages over commonly known 3D hall position sensors.

Specifically, due to the constructional smaller distance between the target and the contactless position sensor and due the higher sensitivity of the sensor, the described contactless position sensor overcomes the need for strong permanent magnets made from NdFeB.

Further advantageously, the permanent magnet must not be mounted directly on the target whose position is to be detected. In the described example, the permanent magnet must not be mounted inside of the gearbox, which requires cleanness the assembly process.

Even further advantageous, misalignment of the permanent magnet can be matched and calibrated in the sensor assembly. This reduces 50% of the tolerance from magnetic position sensors without an infield calibration or pairing of sensor and magnet combinations.

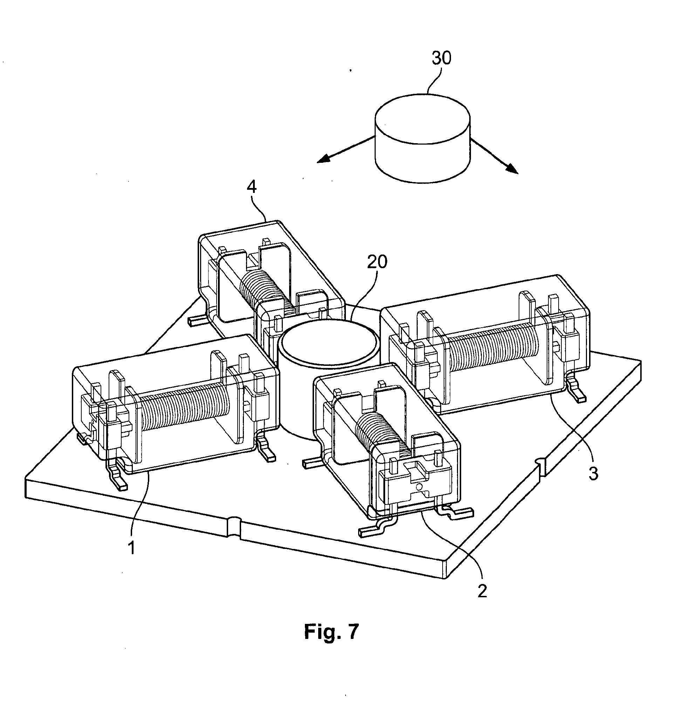

Referring now to Fig. 7, a contactless position sensor 500 according to a fifth embodiment of the invention is illustrated in connection with the ferromagnetic target 20.

The contactless position sensor 500 according to the fifth embodiment comprises four sensor coils 1, 2, 3 and 4 and the electrical circuit 17 as already described with respect to the fourth embodiment. Within the contactless position sensor 400, the four sensor coils 1, 2, 3 and 4 are arranged in a square shape. In other words, the four sensor coils 1, 2, 3 and 4 are respectively positioned at the corners of a square forming the geometry of the contactless position sensor 500.

Similarly to the fourth embodiment, the contactless position sensor 500, includes the four sensor coils 1, 2, 3 and 4, each comprising a magnetic permeable core 5, 6, 7 and 8 and windings 9, 10, 11 and 12 surrounding the magnetic permeable core 5, 6, 7 and 8 defining a coil axis. In the contactless position sensor 500, the sensor coils 1, 2, 3 and 4 are pair-wise arranged such that the coil axes are essentially in alignment (i.e. axial alignment) to each other.

In this respect, the sensor coils 1 and 3 of the contactless position sensor 500 are consecutively arranged (i.e. behind one another) on a longitudinal axis, and the sensor coil 2 and 4 of the contactless position sensor 500 are also consecutively arranged (i.e. behind one another) on another longitudinal axis. Advantageously, the two longitudinal axes are in one plane.

Accordingly, the sensor coils 1, 2, 3 and 4 point with one end (i.e. close end) towards each other and with the other end (i.e. distant end) of each of the sensor coils 1, 2, 3 and 4 pointing away from each other.

Additionally, a series resistor $R_1$, $R_2$, $R_3$ and $R_4$ is provided for each of the four sensor coils 1, 2, 3 and 4. Similar to the fourth embodiment, each of the series resistors $R_1$, $R_2$, $R_3$ and $R_4$ is connected in the contactless position sensor 500 in series to the respective sensor coil 1, 2, 3 and 4 in order to form a series circuit. The four series circuits are inter-connected to form a bridge circuit including for input terminals $IN_1$, $IN_2$, $IN_3$ and $IN_4$.

The electrical circuit 17 supplies the inputs $IN_1$, $IN_2$, $IN_3$ and $IN_4$ of the bridge circuit with a zero-degree phase-shifted and a 90-degree phase-shifted version of the predetermined alternating current I. For conciseness, it shall be here referred only to the fourth embodiment for the operation of the contactless position sensor 500.

References

| Reference Numerals | Description |
|---|---|
| 100, 200, 300, 400, 500 | Contactless position sensor |
| 1, 2, 3, 4 | Sensor coils |
| 5, 6, 7, 8 | Permeable core |
| 9, 10, 11, 12 | Windings |
| 13, 14, 15, 16 | On end of sensor coil (facing space) |
| 17 | Electrical circuit |
| 20 | Ferromagnetic target |
| 21 | Low-pass filter |
| 22 | High-pass filter |
| 23 | Phase detector |
| 30 | Permanent magnet |
| $R_1$, $R_2$, $R_3$, $R_4$ | Series resistors |
| $V_1$, $V_2$, $V_3$, $V_4$ | Voltages |
| $V_{1H}$, $V_{2H}$, $V_{3H}$, $V_{4H}$ | High-frequency voltage component |
| $V_{1L}$, $V_{2L}$, $V_{3L}$, $V_{4L}$ | Low-frequency voltage component |
| I | Predetermined alternating current |
| $I_1$ | Low-frequency current component |

(continued)

| Reference Numerals | Description |
|---|---|
| $I_2$ | High-frequency current component |

**Claims**

1. Contactless position sensor (100) for detecting a position of a ferromagnetic target (20) by way of deflection of an external magnetic field $H_{ext,}$ comprising:

   at least two sensor coils (1, 2) each comprising a magnetic permeable core (5, 6) and windings (9, 10) surrounding the magnetic permeable core (2, 6) defining a coil axis; wherein the at least two sensor coils (1, 2) are arranged with the coil axes essentially in parallel to each other, and with one end (13, 14) of each of the at least two sensor coils (1, 2) facing a space for the ferromagnetic target (20) to move across with respect to each of the at least two coil axes; and
   an electrical circuit (17) for driving a predetermined alternating current (I) within each of the at least two sensor coils (1, 2) and for determining a high frequency voltage component ($V_{1H}$, $V_{2H}$) of a voltage ($V_1$, $V_2$) across each of the at least two sensor coils (1, 2);
   wherein the predetermined alternating current (I) includes a low frequency current component ($I_1$) set for driving each of the at least two sensor coils (1, 2) into a saturation state, and a high frequency current component ($I_2$) set for determining the impedance of each of the at least two sensor coils (1, 2); and
   wherein the electrical circuit (17) is adapted to detect the position of the ferromagnetic target (20) by subtracting from each other amplitude levels of the determined high frequency voltage components ($V_{1H}$, $V_{2H}$) of two of the voltages ($V_1$, $V_2$) across the respective of the at least two sensor coils (1, 2), and by comparing the subtraction result to a pre-determined reference pattern.

2. Contactless position sensor (300) for detecting a position of a ferromagnetic target (20) by way of deflection of an external magnetic field $H_{ext,}$ comprising:

   at least two sensor coils (1, 2) each comprising a magnetic permeable core (5, 6) and windings (9, 10) surrounding the magnetic permeable core (2, 6) defining a coil axis; wherein the at least two sensor coils (1, 2) are arranged such that the coil axes are in alignment to each other, and that the distant ends (13, 14) of the at least two sensor coils (1, 2) define a space for movement of the ferromagnetic target (20), the movement being in a direction essentially in parallel with respect to each of the at least two coil axes; and
   an electrical circuit (17) for driving a predetermined alternating current (I) within each of the at least two sensor coils (1, 2) and for determining a high frequency voltage component ($V_{1H}$, $V_{2H}$) of a voltage ($V_1$, $V_2$) across each of the at least two sensor coils (1, 2);
   wherein the predetermined alternating current (I) includes a low frequency current component ($I_1$) set for driving each of the at least two sensor coils (1, 2) into a saturation state, and a high frequency current component ($I_2$) set for determining the impedance of each of the at least two sensor coils (1, 2); and
   wherein the electrical circuit (17) is adapted to detect the position of the ferromagnetic target (20) by subtracting from each other amplitude levels of the determined high frequency voltage components ($V_{1H}$, $V_{2H}$) of two of the voltages ($V_1$, $V_2$) across the respective of the at least two sensor coils (1, 2), and by comparing the subtraction result to a pre-determined reference pattern.

3. The contactless position sensor (100) according to claim 1 or 2, wherein the electrical circuit (17) further comprises a high-pass filter (22) for determining the high frequency voltage component ($V_{1H}$, $V_{2H}$) of the voltage ($V_1$, $V_2$) across each of the at least two sensor coils (1, 2); and wherein the cut-off frequency of the high-pass filter (22) is based on the frequency of the high frequency current component ($I_2$) for the respective of the at least two sensor coils (1, 2).

4. The contactless position sensor (10) according to one of claims 1 -to 3, wherein the electrical circuit (17) further comprises:

   - a low-pass filter (21) for determining a low frequency voltage component ($V_{1L}$, $V_{2L}$) of the voltage ($V_1$, $V_2$) across each of the at least two sensor coils (1, 2) resulting from the respective low frequency current component ($I_1$); and

wherein the cut-off frequency of the low-pass filter (21) is based on the frequency ($f_1$) of the low frequency current component ($I_1$) for the respective of the at least two sensor coils (1, 2).

5. The contactless position sensor (100) according to claim 4, wherein the electrical circuit (17) further comprises:

   - a phase detector (23) for detecting a phase-offset between two low frequency voltage components ($V_{1L}$, $V_{2L}$) of the voltages ($V_1$, $V_2$) across the respective two sensor coils (1, 2); and
   wherein, based on the detected phase-offset, one of the two determined high frequency voltage components ($V_{1H}$, $V_{2H}$) is shifted with respect to the other of the two determined high frequency voltage components ($V_{1H}$, $V_{2H}$) before subtracting from each other an amplitude level of the two high frequency voltage components ($V_{1H}$, $V_{2H}$).

6. The contactless position sensor (100) according to one of claims 1 to 5, wherein the electrical circuit (17) is further adapted to subtract from each other a level of an amplitude envelope of the determined high frequency voltage component ($V_{1H}$, $V_{2H}$) across two of the at least two sensor coils (1, 2).

7. The contactless position sensor (100) according to one of claims 1 to 6, wherein an amplitude of the low frequency current component ($I_1$) is set based on the external magnetic field $H_{ext}$ to be used for detecting a position of a ferromagnetic target (20); and
   wherein a low frequency ($f_1$) of the low frequency current component ($I_1$) is set such that the impedance of the respective of the at least two sensor coils (1, 2) for the low frequency ($f_1$) corresponds to the DC characteristic of the sensor coil (1, 2).

8. The contactless position sensor (100) according to one of claims 1 to 7, wherein the high frequency ($f_2$) of the high frequency current component ($I_2$) is set for each of the at least two sensor coils (1, 2) based on the magnetic permeability of the respective sensor coil (1, 2), such that the high frequency current component ($I_2$) allows measurement of the impedance but has a negligible effect on magnetization of the magnetic permeable core (5, 6) of the respective sensor coil (1, 2).

9. The contactless position sensor (100) according to one of claims 1 to 8, wherein the high frequency ($f_2$) of the high frequency current component ($I_2$) is set for each of the at least two sensor coils (1, 2) to correspond to the resonance frequency of the respective of the at least two sensor coils (1, 2).

10. The contactless position sensor (100) according to one of claims 1 to 9, further comprising a series resistor ($R_1$, $R_2$) for each of the at least two sensor coils (1, 2), wherein each series circuit, formed of the series resistor ($R_1$, $R_2$) and of the respective sensor coil (1, 2), is supplied by the electrical circuit (17) with the predetermined alternating current (I).

11. The contactless position sensor (100) according to claim 10, wherein each of the series resistors ($R_1$, $R_2$) is configured to have a same resistance value as the DC impedance value of the connected sensor coil (1, 2).

12. The contactless position sensor (100) according to one of claims 10 and 11, comprising:

   four sensor coils (1, 2, 3, 4) each comprising a magnetic permeable core (5, 6, 7, 8) and windings (9, 10, 11, 12) surrounding the magnetic permeable core (5, 6, 7, 8) defining a coil axis; and a series resistor ($R_1$, $R_2$, $R_3$, $R_4$) for each of the four sensor coils (1, 2, 3, 4);
   wherein each series circuit, formed of the series resistor ($R_1$, $R_2$, $R_3$, $R_4$) and the respective sensor coil (1, 2, 3, 4), is supplied by the electrical circuit (17) with one of a zero-degree, a 90-degree, a 180-degree and a 270-degree phase-shifted version of the predetermined alternating current (I), the phase-shift being set based on the low-frequency current component ($I_1$); and
   wherein the electrical circuit (17) is adapted to detect the position of the ferromagnetic target (20) by subtracting from each other amplitude levels of the high frequency voltage components ($V_{1H}$, $V_{2H}$, $V_{3H}$, $V_{4H}$) of two of the determined voltages ($V_1$, $V_2$, $V_3$, $V_4$) across the respective two sensor coils (1, 3; 2, 4) that are supplied with zero-degree and the 180-degree phase-shifted or that are supplied with the 90-degree and the 270-degree phase-shifted version of the predetermined alternating current (I), and by comparing the subtraction results to a pre-determined reference pattern.

13. The contactless position sensor (100) according to claim 12, wherein the four sensor coils are positioned forming a square arrangement with the coil axes essentially in parallel to each other.

**14.** The contactless position sensor (100) according to one of claims 1 to 13, further comprising a radial magnetized permanent magnet (30) arranged in-between the at least two sensor coils (1, 2) for generating an external magnetic field $H_{ext}$ which is essentially perpendicular with respect to each of the at least two coil axes.

**15.** Contactless position sensor system, comprising:

a contactless position sensor (100) according to one of claims 1 to 14;
a permanent magnet (30) arranged in-between the at least two sensor coils (1, 2) for generating an external magnetic field $H_{ext}$ which is essentially perpendicular with respect to each of the at least two coil axes; and
a ferromagnetic target (20) which is to be moved across with respect to each of the at least two coil axes in a space faced by one end (13, 14) of each of the at least two sensor coils (1, 2);
wherein contactless position sensor (100) detects a position of a ferromagnetic target (20) by way of deflection of the external magnetic field $H_{ext}$.

Fig. 1

**Fig. 2**

20

1

2

N

S

5 9 30 6 10

Z

H

**Fig. 3**

Fig. 4a    Fig. 4b    Fig. 4c

Fig. 5

**Fig. 6**

**Fig. 7**

Europäisches
Patentamt

European
Patent Office

Office européen
des brevets

# EUROPEAN SEARCH REPORT

Application Number

EP 13 18 5418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 896 205 A1 (SONY PRECISION TECHNOLOGY INC [JP]) 10 February 1999 (1999-02-10) * abstract; figures 7,10 * * paragraph [0060] - paragraph [0068] * | 1,2 | INV. G01D5/22 |
| A | US 5 781 006 A (BEICHLER JOHANNES [DE]) 14 July 1998 (1998-07-14) * abstract; figure 1 * * claim 1 * | 2 | |
| A | US 2011/316558 A1 (PFAFFINGER CHRISTIAN [DE] ET AL) 29 December 2011 (2011-12-29) * abstract; figure 1 * * paragraph [0055] - paragraph [0057] * | 1 | |
| A | EP 0 936 443 A1 (SIEMENS AG [DE] TYCO ELECTRONICS LOGISTICS AG [CH]) 18 August 1999 (1999-08-18) * abstract; figure 1 * * claim 1 * | 1 | |
| | | | TECHNICAL FIELDS SEARCHED (IPC) |
| | | | G01D |

The present search report has been drawn up for all claims

| Place of search | Date of completion of the search | Examiner |
|---|---|---|
| Munich | 10 October 2013 | Tano, Valeria |

EPO FORM 1503 03.82 (P04C01)

**ANNEX TO THE EUROPEAN SEARCH REPORT**
**ON EUROPEAN PATENT APPLICATION NO.**                    EP 13 18 5418

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2013

| Patent document cited in search report | | Publication date | Patent family member(s) | | Publication date |
|---|---|---|---|---|---|
| EP 0896205 | A1 | 10-02-1999 | EP | 0896205 A1 | 10-02-1999 |
| | | | JP | 4367966 B2 | 18-11-2009 |
| | | | WO | 9833041 A1 | 30-07-1998 |
| US 5781006 | A | 14-07-1998 | DE | 4425904 A1 | 25-01-1996 |
| | | | EP | 0693673 A2 | 24-01-1996 |
| | | | JP | 3457102 B2 | 14-10-2003 |
| | | | JP | H0861906 A | 08-03-1996 |
| | | | US | 5781006 A | 14-07-1998 |
| US 2011316558 | A1 | 29-12-2011 | CN | 102246006 A | 16-11-2011 |
| | | | DE | 102008063527 A1 | 01-07-2010 |
| | | | EP | 2368094 A2 | 28-09-2011 |
| | | | US | 2011316558 A1 | 29-12-2011 |
| | | | WO | 2010069284 A2 | 24-06-2010 |
| EP 0936443 | A1 | 18-08-1999 | DE | 19805783 A1 | 16-09-1999 |
| | | | EP | 0936443 A1 | 18-08-1999 |

EPO FORM P0459

**EP 2 789 986 A1**

**Patent documents cited in the description**

- EP 0684454 A1
- EP 0891560 B1